# EUROPÄISCHE PATENTSCHRIFT

(11) **EP 2 145 370 B1**
(45) Veröffentlichungstag und Bekanntmachung des Hinweises auf die Patenterteilung: **14.06.2017**
(21) Anmeldenummer: 08757990.0
(22) Anmeldetag: 30.04.2008
(51) Int. Cl.: H02H 9/06, H02H 3/04

(54) **GERÄT ZUM SCHUTZ VON DATENLEITUNGEN GEGEN ÜBERSPANNUNGEN**
DEVICE FOR PROTECTING DATA LINES AGAINST OVERVOLTAGES
APPAREIL DE PROTECTION DE LIGNES DE TRANSMISSION DE DONNÉES CONTRE DES SURTENSIONS

(30) Priorität: 05.05.2007 DE 102007021190
(43) Veröffentlichungstag der Anmeldung: 20.01.2010
(73) Patentinhaber: OBO Bettermann GmbH & Co. KG, 58710 Menden (DE)
(72) Erfinder: HOLTERHOFF, Martin, 58710 Menden (DE); ECKARDT, Jörg, 58710 Menden (DE); SCHURWANZ, Jürgen, 58708 Menden (DE); OGOREK, Udo, 59077 Hamm (DE)
(74) Vertreter: Köchling, Conrad-Joachim
(86) Internationale Anmeldenummer: PCT/DE2008/000729
(87) Internationale Veröffentlichungsnummer: WO 2008/135019

(56) Entgegenhaltungen:
- EP-A- 0 755 107
- US-A- 4 586 104
- US-B1- 6 252 754

## Beschreibung

Die Erfindung betrifft ein Gerät zum Schutz von Datenleitungen gegen Überspannungen mit einem Gehäuse mit mehreren Eingängen für Datenleitungen, mehreren Ausgängen für die Datenleitungen, sowie einem Eingang für eine Abschirmung, die an einen Erd- oder Masseanschluss angeschlossen ist, wobei zwischen die Ein- und Ausgänge der Datenleitungen und dem Eingang der Abschirmung eine Überspannungsschutzschaltung mit Gasableitern und einer Suppressordiode geschaltet sind.

Derartige Geräte sind im Stand der Technik bekannt. Das Gerät weist ein Gerätegehäuse auf, welches die entsprechenden Anschlüsse und Schaltungen aufnimmt. Ein solches Gehäuse ist beispielsweise an eine Hutschiene eines Verteilerkastens anschließbar oder in sonstiger Weise befestigbar. Die entsprechenden Datenleitungen werden an die entsprechenden Anschlüsse des Gerätes angeschlossen, damit das Gerät funktionstüchtig ist. Die Überspannungsschutzschaltung besteht aus Gasableitern, Entkopplungswiderständen, Gleichrichtern und einer Suppressordiode. Dieser Aufbau ist allgemein bekannt und üblich. Zum Schutz von Datenleitungen sind zwei Spannungsfälle zu berücksichtigen. Zum einen sind Längsspannungen zu berücksichtigen, dass heißt, Spannungen zwischen einer Datenleitung gegen Erde, und Querspannungen, dass heißt, Spannungen zwischen den Datenleitungen. Sämtliche Spannungen müssen in das Schutzkonzept einbezogen werden. Sollte eine Längsspannung zwischen einer Datenleitung und der Erdleitung entstehen, so würde ein entsprechender Gasableiter bei einer gewissen Spannungshöhe ansprechen, dass heißt, niederohmig werden. Der Strom kann anschließend gegen Erde über den Gasableiter abfließen.

Sollte durch induktive Einkopplung zwischen den Datenleitungen eine zu große Spannung entstehen, so begrenzt die Suppressordiode diese. Sie wird in diesem Falle niederohmig und leitet den Strom ab. Die Gleichrichter, die üblicherweise in Serie mit der Suppressordiode geschaltet sind, haben nur die Aufgabe die Kapazität zu verringern, damit hochfrequente Datensignale nicht gedämpft werden.

In seltenen Fällen kann es passieren, dass die Querspannungen so groß werden, dass ein resultierender Strom die Suppressordiode zerstören könnte. Aus diesem Grunde sind Entkopplungswiderstände vorgeschaltet. Fließt ein Strom über die Suppressordiode, so ruft dieser Strom einen Spannungsabfall an den Entkopplungswiderständen hervor. Dieser Spannungsabfall in Summe mit dem Spannungsabfall an der Suppressordiode liegt auch an dem parallel geschalteten Gasableiter an. Sollte der Strom zu groß werden, genügt der Spannungsabfall an den Widerständen und der Diode dafür, dass der vorgeschaltete Gasableiter zündet. Dieser ist dann in der Lage, die höheren Ströme abzuleiten.

Solche Überspannungsschutzgeräte sind aus US 4,586,104 und US 6,252,754 bekannt.

Um die Funktion des Gerätes zum Schutz gegen Überspannungen sicherzustellen, ist es erforderlich, dass die Suppressordiode auf Funktionsfähigkeit geprüft wird. Ausgehend von diesem Stand der Technik liegt der Erfindung die Aufgabe zugrunde, ein Gerät gattungsgemäßer Art anzugeben, welches die Überprüfung der Suppressordiode ermöglicht, ohne dass die über die Datenleitungen transferierten Signale beeinflusst werden.

Zur Lösung dieser Aufgabe schlägt die Erfindung vor, dass die Teilschaltung, in die die Suppressordiode integriert ist, einen ersten Schutz-Schaltkreis umfasst, mittels dessen die Suppressordiode an die Datenleitungen angeschlossen ist, sowie einen zweiten Schaltkreis, der als Prüfschaltkreis dient und bei dem die Suppressordiode von den Datenleitungen abgetrennt ist, wobei die beiden Schaltkreise mittels eines Schalters alternativ aktivierbar sind,
dass der Schalter mittels eines durch eine Gehäuseöffnung des Gerätes steckbaren Schaltstiftes betätigbar ist, derart, dass bei nicht gestecktem Schaltstift die Suppressordiode an den Schutz-Schaltkreis angeschlossen ist und bei gestecktem Schaltstift an den Prüfschaltkreis angeschlossen ist, wobei im gesteckten Zustand Kontakte des Schaltstiftes über Kontaktstellen mit den Anschlüssen der Suppressordiode verbunden sind, und einen Prüfkreis bildet, in den über den Schaltstift ein Prüfstrom einspeisbar ist.

Durch diese Anordnung und Ausbildung ist es möglich, einerseits die Suppressordiode funktionsgerecht in den ersten Schutzschaltkreis des Gerätes einzuschalten, wenn keine Überprüfung der Suppressordiode erfolgt, so dass die Funktion der Suppressordiode erreicht wird. Andererseits ist es möglich, die Suppressordiode von dem ersten Schutzschaltkreis zu trennen und lediglich in den zweiten Schaltkreis, der als Prüfschaltkreis dient, einzuschalten, um dann, wenn diese Schaltposition erreicht ist, die Überprüfung der Suppressordiode vornehmen zu können. Dabei erfolgt keine Beeinflussung der über die Datenleitungen transferierten Signale. Die in das Gerät integrierte Schnittstelle zur messtechnischen Prüfung der Schutzbeschaltung ist durch eine Gehäuseöffnung gebildet, in die der entsprechende Schaltstift einführbar ist, wobei der Schaltstift selbst den entsprechenden Schalter zur Umschaltung auf einen der beiden Schaltkreise betätigt.

Beim Einführen des Schaltstiftes in die entsprechende Gehäuseöffnung wird mittels des integrierten Schalters die Suppressordiode von dem eigentlichen Schutzkreis getrennt und in den alternativen Prüfkreis eingeschaltet. Ist dies erfolgt, so wird eine konstante Gleichspannung an die Mess-Schnittstelle der Schaltung gelegt. Abhängig vom Zustand der Suppressordiode fließt bei einer intakten Suppressordiode kein Strom, da sich die Diode im hochohmigen Zustand befindet. Sollte die Suppressordiode jedoch bedingt durch Überlastung ihr Sperrverhalten unter konstanter Spannung verlieren, so fließt ein sehr kleiner, aber messbarer Strom. Dieser resultierende Strom kann innerhalb der Prüfeinrichtung ermittelt und ausgewertet werden. Je nach Größe des Stromes ist dieser ein Signal für eine intakte oder defekte Schutzschaltung.

Um bei gestecktem Schaltstift eine entsprechende Prüfung vornehmen zu können, ist vorgesehen, dass an den Schaltstift ein Prüfgerät mit Spannungsversorgung zur Erzeugung des Prüfstromes und mit einer Signaleinrichtung angeschlossen ist.

Bevorzugt ist zudem vorgesehen, dass in dem Gehäuse des Gerätes eine Platine mit Leiterbahnen angeordnet ist, auf der die Überspannungsschutzelemente angeordnet sind, und die die Anschlusskontakte für die Datenleitungen und die Abschirmung aufweist, wobei die Platine auch die beiden Schaltkreise und den Schalter aufweist.

Ein Ausführungsbeispiel der Erfindung ist in der Zeichnung dargestellt und im Folgenden näher erläutert.

Es zeigt:
- Figur 1: ein erfindungsgemäßes Gerät in Ansicht, teilweise geschnitten;
- Figur 2: eine Überspannungsschutzschaltung des Gerätes als Schaltschema;
- Figur 3: ein erfindungswesentliches Detail der Schutzschaltung in einer ersten Funktionsstellung;
- Figur 4: desgleichen in einer zweiten Funktionsstellung.

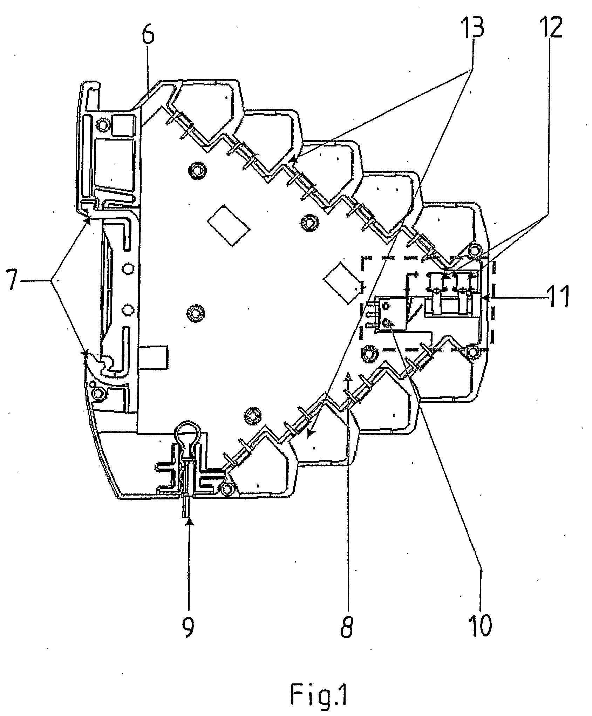

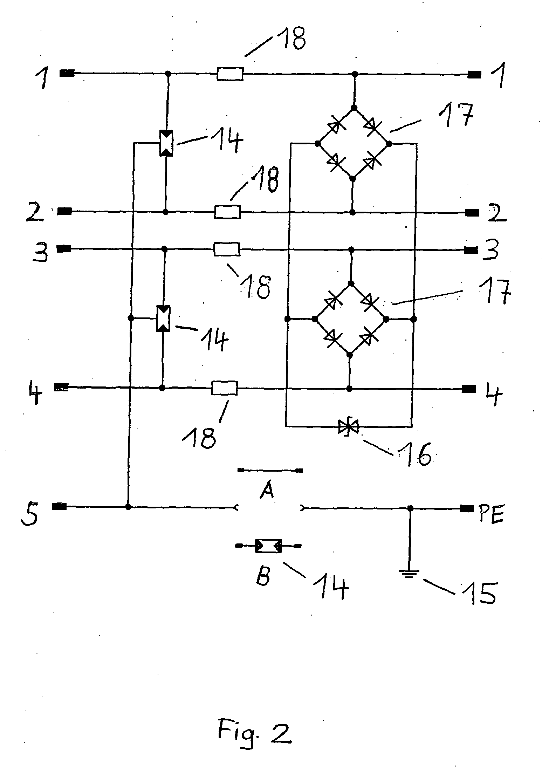

In Figur 1 ist ein Gerät gezeigt, bei dem die erfindungsgemäße Ausbildung realisiert ist. Das Gerät dient zum Schutz von Datenleitungen gegen Überspannungen. Es weist ein Gehäuse 6 auf, welches mit einer Rastung 7 auf eine Hutschiene oder dergleichen aufsetzbar ist, wobei hierdurch gleichzeitig ein Potenzialausgleich erreicht wird. Im Gehäuse ist eine Platine 8 mit Schutzschaltung vorgesehen. Bei 9 ist eine Erdungsbrücke gezeigt. Bei 10 ist ein Trennschalter gezeigt, der später noch erläutert wird. Bei 11 ist eine Schnittstelle gezeigt sowie bei 12 Kontaktfedern zur Kontaktierung eines Schaltelementes. Bei 13 sind einige Verbindungsklemmen angedeutet, die zum Anschluss von Datenleitungen und Schirmleitern dienen. In Figur 2 ist der grundsätzliche Aufbau einer üblichen Schutzschaltung gezeigt. Hierbei sind mit 1 bis 4 Anschlüsse für Datenleitungen gezeigt, während bei 5 ein Anschluss für einen Schirmleiter gezeigt ist. Jeweils zwischen den Datenleitungen 1,2 beziehungsweise 3,4 und der Schirmleitung 5 sind Gasableiter 14 geschaltet. Zusätzlich ist ein Masseleiter zwischen dem Schirmanschluss 5 und der Bezugserde 15 geschaltet. Zum Schutz der Datenleitungen ist zudem eine Suppressordiode 16 gezeigt, die über Gleichrichter 17 an die Datenleitungen 1,2,3,4 angeschlossen ist. Des Weiteren sind Entkopplungswiderstände 18 in die Datenleitungen 1 bis 4 eingeschaltet. Zum Schutz bei Längsspannungen, die zwischen den Datenleitungen 1 bis 4 und der Erdleitung 5 entstehen, sind die Gasableiter 14 vorgesehen, die bei einer gewissen Spannungshöhe ansprechen und niederohmig werden. Der Strom kann dann über die Gasableiter 14 zur Erde abfließen. Bei auftretenden induktiven Einkopplungen zwischen den Datenleitungen 1 und 2 beziehungsweise 3 und 4 ist zur Begrenzung der Spannung die Suppressordiode 16 vorgesehen, die in diesem Falle niederohmig wird und den Strom ableitet. Die Gleichrichter 17, die in Serie zu der Suppressordiode 16 geschaltet sind, haben nur die Aufgabe die Kapazität zu verringern, damit hochfrequente Datensignale nicht gedämpft werden.

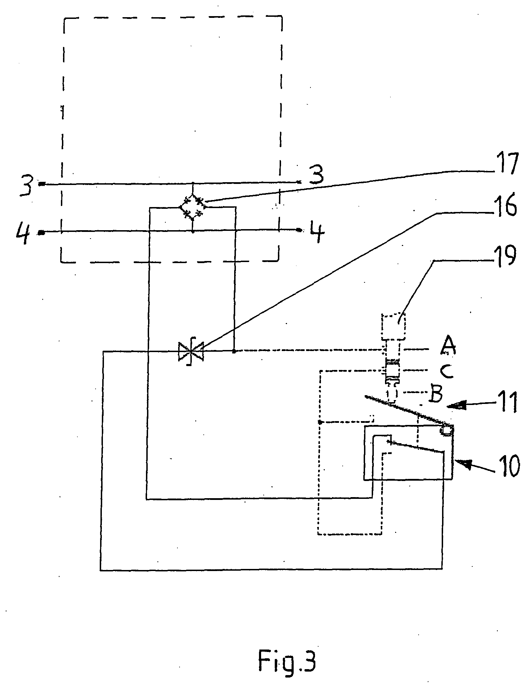

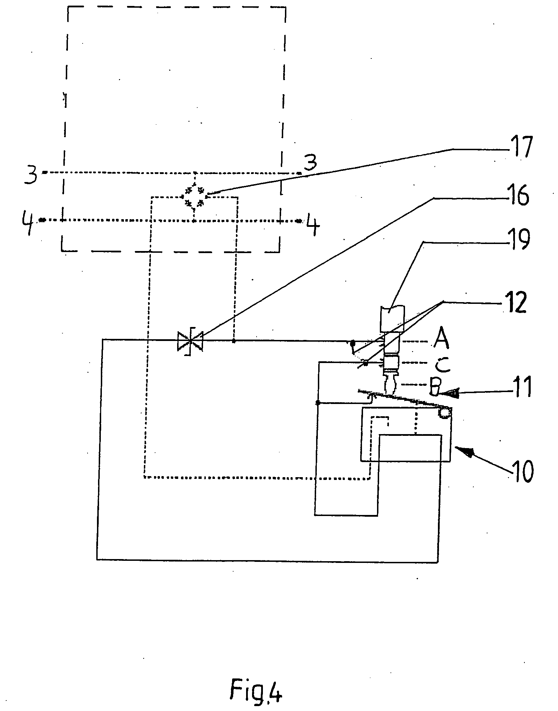

In seltenen Fällen kann es passieren, dass die Querspannung zwischen den Datenleitungen so groß wird, dass ein resultierender Strom die Suppressordiode 16 zerstören könnte. Aus diesem Grunde sind Entkopplungswiderstände 18 vorgesehen. Fließt ein Strom über die Suppressordiode 16, so ruft dieser Strom einen Spannungsabfall an den Entkopplungswiderständen 18 hervor. Dieser Spannungsabfall liegt in Summe mit dem Spannungsabfall einer Suppressordiode 16 auch an dem parallel geschalteten Gasableiter 14 an. Sollte der Strom zu groß werden, genügt der Spannungsabfall an den Widerständen 18 und der Diode 16, damit der vorgeschaltete Gasableiter 14 zündet, der dann die höheren Ströme ableitet. Wie in Figur 3 und 4 gezeigt, umfasst die Teilschaltung, die in die Suppressordiode 16 integriert ist, einen ersten Schutz-Schaltkreis, der in Figur 3 in durchgezogenen Linien gezeigt ist. Mittels dieses Schutz-Schaltkreises ist die Suppressordiode 16 an die Datenleitungen analog der Darstellung Figur 2 angeschlossen. Es ist ferner ein zweiter Schaltkreis, nämlich ein Prüfschaltkreis vorgesehen, der in Figur 4 in durchgezogenen Linien gezeigt ist. Bei diesem Schaltzustand ist die Suppressordiode 16 von den Datenleitungen 1 bis 4 abgekoppelt und kann auf ihren Zustand überprüft werden. Die Umschaltung auf die beiden alternativen Schaltkreise ist über eine Schnittstelle möglich, die bei 11 angegeben ist. Hierbei ist ein Trennschalter 10 vorgesehen, der mittels eines durch eine Gehäuseöffnung des Gerätes steckbaren Schaltstiftes 19 betätigbar ist. Bei nicht gestecktem Schaltstift stellt sich die Situation gemäß Figur 3 ein, während bei korrekt gestecktem Schaltstift 19 sich die Situation gemäß Figur 4 einstellt. In den Abbildungen 3 und 4 sind jeweils die nicht aktiven Verbindungen gestrichelt gezeigt. Gemäß Darstellung in Figur 3 befindet sich die Suppressordiode 16 im zugeschalteten Zustand zu den Datenleitungen 1 bis 4. Im Falle einer Überspannung (Querspannung) kann der Potentialausgleich über diese Suppressordiode 19 stattfinden. Der Strom fließt in diesem Falle über den Gleichrichter 17 durch die Diode 16 über den Trennschalter 10. In diesem Zustand kann keine Funktionsprüfung der Suppressordiode 16 durchgeführt werden, da ansonsten das Signal der Datenleitungen beeinflusst würde. In Figur 4 ist die andere Position des Schaltstiftes 19 gezeigt. Der Schaltstift 19, der an ein entsprechendes Prüfgerät mit Spannungsversorgung angeschlossen ist, wird in die entsprechende Gehäuseöffnung eingeführt. Dabei berührt die Spitze des als Klinkenstecker ausgebildeten Schaltstiftes 19 den Öffnerschalter 10 und drückt den in der Zeichnung oberen Kontakt nach unten in die Kontaktlage. Der zweite Kontakt des Schalters wird auf einen anderen Strompfad umgeschaltet. Hierdurch wird die Suppressordiode 16 von den Datenleitungen 1 bis 4 getrennt.

An Punkt A des Klinkensteckers liegt die Mess-Spannung an. An der Spitze B liegt Masse an. Erst wenn der Klinkenstecker in der richtigen Position gemäß Figur 4 den Schalter 10 kontaktiert, wird die Masse von Punkt B über den Schalter 10 an Punkt C weitergegeben. Dies geschieht über metallene Federkontakte 12. Erst dann erhält der Punkt C das Masse-Signal und die Prüfmessung kann mit dem an den Schaltstift 19 angeschlossenen Prüfgerät erfolgen.

Die Erfindung stellt somit ein Gerät zum Schutz von Datenleitungen gegen Überspannungen zur Verfügung, bei dem zur Überprüfung der Suppressordiode 16 diese in einfacher Weise von dem ersten Schaltkreis getrennt werden kann und auf einen zweiten Schaltkreis, den Prüfschaltkreis gelegt werden kann, um die Prüfung der Suppressordiode unabhängig von den durch die Datenleitungen 1 bis 4 transferierten Daten durchführen zu können.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Gerät zum Schutz von Datenleitungen gegen Überspannungen mit einem Gehäuse (6) mit mehreren Eingängen für Datenleitungen (1-4), mehreren Ausgängen für die Datenleitungen (1-4), sowie einem Eingang für eine Abschirmung (5), die an einen Erd- oder Masseanschluss angeschlossen ist, wobei zwischen die Ein- und Ausgänge der Datenleitungen (1-4) und dem Eingang der Abschirmung (5) eine Überspannungsschutzschaltung mit Gasableitern (14) und einer Suppressordiode (16) geschaltet sind, **dadurch gekennzeichnet, dass** die Teilschaltung, in die die Suppressordiode (16) integriert ist, einen ersten Schutz-Schaltkreis umfasst, mittels dessen die Suppressordiode (16) an die Datenleitungen (1-4) angeschlossen ist, sowie einen zweiten Schaltkreis, der als Prüfschaltkreis dient und bei dem die Suppressordiode (16) von den Datenleitungen (1-4) abgetrennt ist, wobei die beiden Schaltkreise mittels eines Schalters (10) alternativ aktivierbar sind, dass der Schalter (10) mittels eines durch eine Gehäuseöffnung des Gerätes steckbaren Schaltstiftes (19) betätigbar ist, derart, dass bei nicht gestecktem Schaltstift (19) die Suppressordiode (16) an den Schutz-Schaltkreis angeschlossen ist und bei gestecktem Schaltstift (19) an den Prüfschaltkreis angeschlossen ist, wobei im gesteckten Zustand Kontakte des Schaltstiftes (19) über Kontaktstellen mit den Anschlüssen der Suppressordiode (16) verbunden sind, und einen Prüfkreis bildet, in den über den Schaltstift (19) ein Prüfstrom einspeisbar ist.

2. Gerät nach Anspruch 1, **dadurch gekennzeichnet, dass** an den Schaltstift (19) ein Prüfgerät mit Spannungsversorgung zur Erzeugung des Prüfstromes und mit einer Signaleinrichtung angeschlossen ist.

3. Gerät nach Anspruch 1 oder 2, **dadurch gekennzeichnet, dass** in dem Gehäuse (6) des Gerätes eine Platine (8) mit Leiterbahnen angeordnet ist, auf der die Überspannungsschutzelemente angeordnet sind, und die die Anschlusskontakte für die Datenleitungen (1-4) und die Abschirmung (5) aufweist, wobei die Platine (8) auch die beiden Schaltkreise und den Schalter (10) aufweist.

## Claims

1. A device for protecting data lines against overvoltages, comprising a housing (6) having a plurality of inputs for data lines (1-4), a plural-ity of outputs for the data lines (1-4), and an input for a shield (5) connected to an a earthing or ground terminal, between the inputs and outputs of the data lines (1-4) and the input of the shield (5) an overvoltage protection circuit having gas arresters (14) and a suppressor diode (16) being connected, **characterized by that** the subcircuit that includes the suppressor diode (16) comprises a first protective circuit, by means of which the suppressor diode (16) is connected to the data lines (1-4), and a second circuit serving as a test circuit, in which the suppressor diode (16) is disconnected from the data lines (1-4), the two circuits being alternatively activatable by means of a switch (10), that the switch (10) is activatable by means of a switching pin (19) to be introduced through a housing opening of the device so that, with not introduced switching pin (19), the suppressor diode (16) is connected to the protective circuit and, and with introduced switching pin (19), the suppressor diode (16) is connected to the test circuit, and in the introduced condition, contacts of the switching pin (19) being connected through contact positions to the terminals of the suppressor diode (16), and forming a test circuit, to which a test current can be supplied through the switching pin (19).

2. The device according to claim 1, **characterized by that** to the switching pin (19) is connected a test device with a voltage supply for generating the test current and with a signaling unit.

3. The device according to claim 1 or 2, **characterized by that** in the housing (6) of the device is disposed a circuit board (8) with circuit tracks, on which the overvoltage protection elements are disposed, and which includes the connecting contacts for the data lines (1-4) and the shield (5), the circuit board (8) also including the two circuits and the switch (10).

## Revendications

1. Dispositif de protection de lignes de données contre les surtensions, comprenant un boîtier (6) avec une pluralité d'entrées pour des lignes de données (1-4), une pluralité de sorties pour les lignes de données (1-4), et une entrée pour un blindage (5) raccordé à une jonction de mise à la terre ou à la masse, entre les entrées et sorties des lignes de données (1-4) et l'entrée du blindage (5) un circuit de protection contre les surtensions ayant des éclateurs à gaz (14) et une diode de suppression (16) étant raccordé, **caractérisé en ce que** la partie du circuit qui comporte la diode de suppression (16) comprend un premier circuit de protection, au moyen duquel la diode de suppression (16) est raccordée aux lignes de données (1-4), et un deuxième circuit servant de circuit de contrôle, dans lequel la diode de suppression (16) est séparée des lignes de données (1-4), les deux circuits pouvant être activés alternativement au moyen d'un interrupteur (10), que l'interrupteur (10) peut être activé au moyen d'une tige d'actionnement (19) à être introduite à travers une ouverture du boîtier du dispositif de façon que, si la tige d'actionnement (19) n'est pas introduite, la diode de suppression (16) soit raccordée au circuit de protection et, si la tige d'actionnement (19) est introduite, la diode de suppression (16) soit raccordée au circuit de contrôle, et dans l'état introduit, des contacts de la tige d'actionnement (19) étant raccordés par l'intermédiaire de points de contact aux bornes de la diode de suppression (16), et réalisant un circuit de contrôle, auquel un courant de contrôle peut être alimenté par l'intermédiaire de la tige d'actionnement (19).

2. Dispositif selon la revendication 1, **caractérisé en ce qu'**à la tige d'actionnement (19) est raccordé un dispositif de contrôle avec une alimentation en tension pour générer le courant de contrôle et avec une unité de signalisation.

3. Dispositif selon la revendication 1 ou 2, **caractérisé en ce que** dans le boîtier (6) du dispositif est disposée une carte imprimée (8) avec des pistes de connexion, sur laquelle les éléments de protection contre les surtensions sont prévus, et qui comporte les contacts de connexion pour les lignes de données (1-4) et le blindage (5), la carte imprimée (8) aussi comportant les deux circuits et l'interrupteur (10).
